# EUROPEAN PATENT SPECIFICATION

(11) **EP 2 329 258 B1**
(45) Date of publication and mention of the grant of the patent: **09.05.2018**
(21) Application number: 09810895.4
(22) Date of filing: 29.09.2009
(51) Int. Cl.: G01N 30/88, G01N 30/46, G01N 30/86, B01D 15/40, B01D 15/16, B01D 15/18

(54) **PARALLEL SCREENING SUPERCRITICAL FLUID CHROMATOGRAPHY**
PARALLEL-SCREENING-CHROMATOGRAFIE FÜR SUPERKRITISCHE FLÜSSIGKEITEN
CHROMATOGRAPHIE EN PHASE SUPERCRITIQUE POUR UN CRIBLAGE EN PARALLÈLE

(30) Priority: 29.09.2008 US 194625 P
(43) Date of publication of application: 08.06.2011
(73) Proprietor: Waters Technologies Corporation, Milford, MA 01757-3696 (US)
(72) Inventor: SIDHU, Harbaksh, Allison Park PA 15101 (US); WANG, Ziqiang, Lansdale PA 19446 (US); WEBSTER, Michael, Gibsonia PA 15044 (US)
(74) Representative: Harding, Andrew Philip
(86) International application number: PCT/US2009/005361
(87) International publication number: WO 2010/051005

(56) References cited:
- WO-A1-00/26662
- ZENG ET AL: "Parallel supercritical fluid chromatography/mass spectrometry system for high-throughput enantioselective optimization and separation" JOURNAL OF CHROMATOGRAPHY, ELSEVIER SCIENCE PUBLISHERS B.V, NL LNKD- DOI:10.1016/J.CHROMA.2007.08.079, vol. 1169, no. 1-2, 4 October 2007 (2007-10-04), pages 193-204, XP022284766 ISSN: 0021-9673
- ANONYMOUS: "Autosampler Supplies for Agilent GC and HPLC Systems with CTC Autosamplers" AGILENT TECHNOLOGIES 2007, pages 1-12, XP002579831 Retrieved from the Internet: URL:http://www.chem.agilent.com/Library/br ochures/5989-6837EN_CPOD.pdf> [retrieved on 2010-04-27]
- WELCH CHRISTOPHER J; BIBA MIRLINDA; GOUKER JOSEPH R; KATH GARY; AUGUSTINE PAUL; HOSEK PAUL: "Solving multicomponent chiral separation challenges using a new SFC tandem column screening tool" CHIRALITY, vol. 19, no. 3, March 2007 (2007-03), pages 184-189, XP002579631 WILEY InterScience
- ZHANG Y ET AL: "Rapid method development for chiral separation in drug discovery using multi-column parallel screening and circular dichroism signal pooling" JOURNAL OF CHROMATOGRAPHY, ELSEVIER SCIENCE PUBLISHERS B.V, NL LNKD- DOI:10.1016/J.CHROMA.2004.07.066, vol. 1049, no. 1-2, 17 September 2004 (2004-09-17), pages 75-84, XP004567551 ISSN: 0021-9673

## Description

### CROSS-REFERENCE TO RELATED APPLICATIONS

This application claims priority to provisional application Serial No. 61/194,625, filed September 29, 2008.

### FIELD OF THE INVENTION

This invention relates to an apparatus of parallel processing of two or more samples in supercritical fluid chromatography.

### BACKGROUND INFORMATION

Chromatography is a technique used to, among other things, separate component elements of a starting material. Within the general field of chromatography, there are several types, including normal phase and reverse phase. Supercritical fluid chromatography (SFC) is a high pressure method that typically operates near or above the critical point of the mobile phase fluid and offers significant speed advantage and resolution over traditional techniques such as high performance liquid chromatography (HPLC). SFC employs carbon dioxide or another compressible fluid as a mobile phase, sometimes with a co-solvent, to perform a chromatographic separation. SFC has a wide range of applicability and typically uses small particle sizes of 3-20 microns for column packing material and is for analytical to preparative scale applications because of the lower pressure drop. In HPLC applications pressure at the top of the column typically reaches up to several thousand or even tens of thousands psi but pressure at the bottom is reduced to ambient pressure, creating a significant pressure drop.

The growing role of supercritical fluid chromatography (SFC) for separations in such industries as pharmaceuticals and fine chemicals, along with the diversified nature of the compounds being used in such industries, requires new optimized method development methodology and systems for employing such new methodology. SFC is a normal phase chromatography technique and requires screening of solvents and columns for determining conditions for the separation. The purpose of a separation could be an analytical screen or an optimized method for isolation of compound in larger quantities. Currently, in the SFC process the mixture or compound is injected sequentially into a system that contains a binary pumping system for CO2 and co-solvent, an autosampler for injections, a detector(s) for detecting the component elements of the starting mixture or compound and an automated back pressure regulator for pressure regulation. The user of the method and system repeats the injection in a sequential fashion by varying gradient conditions, columns, solvents, pressure and temperature until a desired result is obtained. It is highly desirable to obtain these results quickly and in an automated fashion. Once results are obtained, the results can be reviewed by the user and further optimized by selecting additional conditions to verify the results.

The sequential nature of current SFC processes and systems can make the process of optimization time-consuming. Therefore, there is a need for an effective method and apparatus for processing multiple mixtures and compounds in parallel instead of in sequence, which would significantly reduce the time and cost of processing by optimizing methods faster.

The following document discloses chromatography apparatus comprising a column group selection valve which selectively diverts a sample to one of two manifolds which, in turn, split the flow to four corresponding columns.

ZENG ET AL: "Parallel supercritical fluid chromatography/mass spectrometry system for high-throughput enantioselective optimization and separation", JOURNAL OF CHROMATOGRAPHY, ELSEVIER SCIENCE PUBLISHERS B.V, NL LNKD-DOI:10.1016/J.CHROMA.2007.08.079, vol. 1169, no. 1-2, 4 October 2007 (2007-10-04), pages 193-204, XP022284766, ISSN:0021-9673

### SUMMARY OF THE INVENTION

The present invention is directed to an apparatus of processing samples and mixtures in parallel mode, that overcomes some of the drawbacks experienced in the prior art of sequential processing.

Accordingly, the present invention provides an apparatus for supercritical fluid chromatography, the apparatus comprising:
a binary pump (12);
an autosampler (module 2), downstream of the binary pump (12), including a sampling valve (21);
a first port switching valve (1), downstream of the autosampler (module 2);
a first manifold (2) downstream of the first port switching valve (1), operable to divide a sample into two or more channels;
two or more channels (4) downstream of the first manifold (2), each channel (4) having a check valve assembly (3), a separation column downstream of the check valve assembly (3) and one or more dedicated detectors (27-31);
a second manifold (6) downstream of the channels (4) to recombine the samples;
a backpressure regulator (26) downstream of the second manifold (6), wherein the apparatus excludes additional backpressure regulators or pumps on individual channels; and
computer software and hardware to
   1) control distribution of fluid through the apparatus, including switching between:
      a multi-channel mode; providing simultaneous parallel screening of the sample through the two or more channels (4); and
      a single channel mode, in which the sample flows through only a selected one of the two or more channels (4);
   2) analyze data collected by the one or more dedicated detectors (27-31); and
   3) optimize separation of analytes by controlling solvent combinations, concentration gradients, pressure and temperature.

These and other aspects of the invention will become more readily apparent from the following detailed description, drawings, and appended claims.

### BRIEF DESCRIPTION OF THE DRAWINGS

The invention is further illustrated by the following drawings in which:
Figure 1 is a diagram of the apparatus of the invention.
Figure 2 is another diagram of the apparatus of the invention.
Figure 3 is a diagram of a check valve assembly used in the invention.
Figures 4A - 4D illustrate chromatograms from Example 1.
Figures 5A - 5D illustrate chromatograms from Example 2.
Figures 6A - 6D illustrate chromatograms from Example 3.
Figures 7A - 7D illustrate chromatograms from Example 4.
Figures 8A - 8D illustrate chromatograms from Example 5.
Figures 9A - 9G illustrate chromatograms from Example 6.

### DETAILED DESCRIPTION OF PREFERRED EMBODIMENTS

As used herein in the specification and claims, including as used in the examples and unless otherwise expressly specified, all numbers may be read as if prefaced by the word "about", even if the term does not expressly appear. Also, any numerical range recited herein is intented to include all sub-ranges subsumed therein.

The present invention describes an apparatus for parallel supercritical fluid chromatography (SFC). A method of parallel screening processes samples on 2 or more columns simultaneously within the same process.

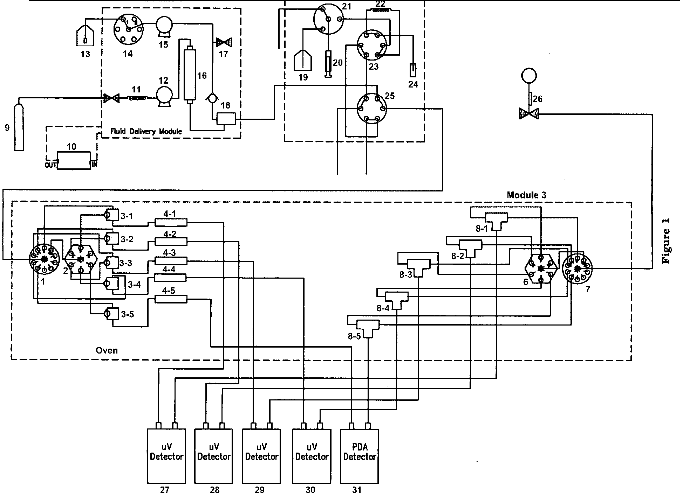

The method for example includes simultaneously processing samples by supercritical fluid chromatography (SFC) on 5 channels on an analytical system (as shown in Figure 1). The number five is arbitrary, for ease of description; any number of channels can be designed into the system, as determined by the needs of the user. Parallel screening can be accomplished on any number of channels, such as 2, 3, 4, 5, 6, 7, 8, 9, 10, 11, 12, 13, 14, 15, 16, 17, 18, 19, 20, 21, 22, 23, 24, up to and including 96 channels, or even more channels, as needed. The method includes passing a portion of an original sample along a SFC flow path to a first channel, separating the sample portion into a profile of single peaks, and moving the peaks down the flow path. The pressure of the supercritical fluid in the flow stream is regulated by a backpressure regulator downstream. The method also includes passing the separated peaks down the path to an analyzer that is inserted in this same first channel flow path for peak characteristics determination.

The method further includes moving the flow stream, after it passes through the analyzer from this first channel, to a manifold (or valve/manifold) for merging with flow streams from other channels to recombine the samples for further analytical processing if any, such as splitting a portion of the sample to a mass spectrometry analyzer for molecular identification; or splitting a portion of the sample to an evaporative light scattering detector for confirmative quantitative analysis, before the samples pass to a backpressure regulator at the end of the flow path.

The parallel screening method of this example further includes processing another portion of the sample along a second channel simultaneously with the processing of the first channel.

Processing on the second channel includes passing another portion of the original sample along a SFC flow path to a second channel, separating the sample into a profile of single peaks, and moving the peaks down the flow path. The pressure of the supercritical fluid in the flow stream of the second channel is also regulated by the same backpressure regulator downstream that is used for first channel. The method also includes passing the separated peaks down the flow path to an analyzer for peak characteristics determination. This analyzer, like the one used in the first channel, functions in a similar fashion, and is also fully dedicated to the use on this second channel only. However, the type of analyzer is not necessarily the same as the first one; it can be any type of analyzer, depending on the purpose of the design. The software is programmed to collect all data types of interest, depending on the type of detector or detectors used on a channel, for example including, but not limited to, absorptions under any specified ultra-violet wavelength (UV), full spectrum determination by photodiode array detector (PDA), light scattering detector (ELSD) and mass spectrometer (MS), flame ionization detector(FID), chemiluminescence nitrogen detector(CLND), corona aerosol detector(CAD), circular dichroism(CD) and other chiral detectors, and on-line infrared(IR) and nuclear magnetic resonance detectors(NMR).

The method further includes, after passing through the analyzer, moving down the flow stream from this second channel to the same manifold (or valve/manifold) used on first channel, for merging with flow streams from other channels including the first channel described above, to recombine the portioned samples for further analytical processing, if desired, before passing the sample to backpressure regulator at the end of the flow path.

In the illustrative example, the method of parallel screening includes processing a portion of the original sample along a third, fourth and fifth channel in a manner similar to the processes discussed above regarding to the first and second channels. In this example, a dedicated analyzer is used for analyzing sample portions in each of corresponding channels before passing the samples to the same manifold (or valve/manifold) to recombine the samples with all other channels moving down stream for any further analytical processing, if any. The combined stream continues to move down the flow path to the same backpressure regulator.

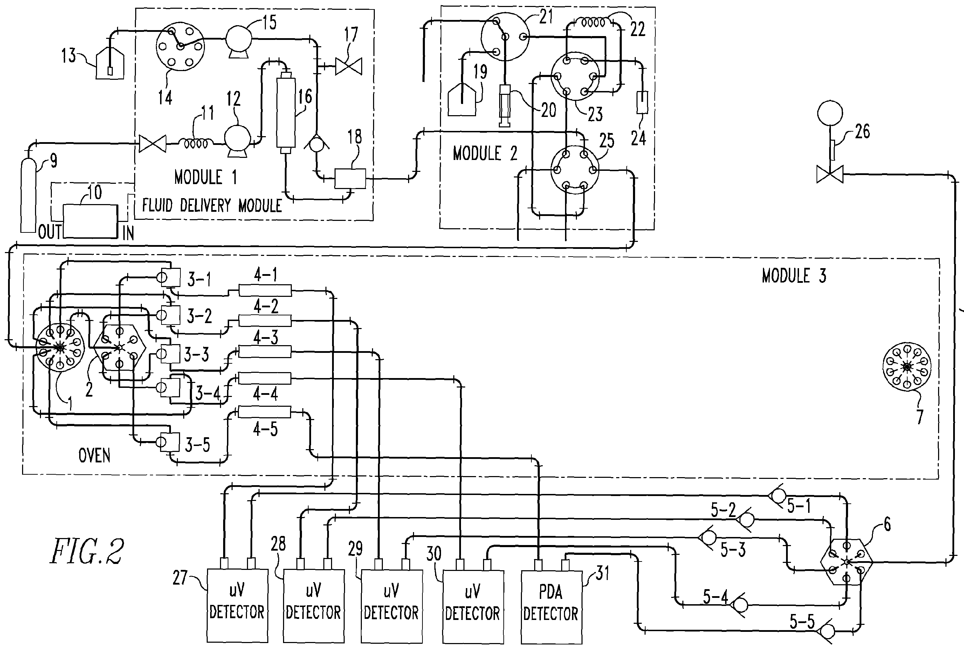

In addition to the parallel screening apparatus and methods described above, an additional aspect is directed to methods for processing samples and mixtures in the conventional sequential mode. In an illustrated example (as shown in Figure 2), a method of conventional sequential screening processes samples on 2 or more columns in a sequential manner within the same process.

The method includes sequentially processing samples by supercritical fluid chromatography (SFC) on 5 channels in an analytical system. As would be understood by one skilled in the art, the system and apparatus can be adapted to sequential screening on any number of channels, such as 2, 3, 4, 5, 6, 7, 8, 9, 10, 11, 12, 13, 14, 15, 16, 17, 18, 19, 20, 21, 22, 23, 24, up to and including 96 channels, or even more channels, depending on the needs of the user.

The method includes passing injected samples along the flow path to any single channel by a selective valve switch. Once the stream moves along the specific channel, flow control is realized through the combination of a switching valve and a directional valve so that the flow will only move along any single specific channel at one time. The method further separates the sample, and moves the sample down the flow path to an analyzer inserted in that channel for peak characteristics determination. After passing through the analyzer, the method moves the fluid stream through the manifold (or valve/manifold) and it continues downstream to a backpressure regulator. The pressure of the supercritical fluid in the channel is controlled by the backpressure regulator.

In this example, the method of conventional sequential screening mode processes a sample through a first, second, third, fourth and fifth channel (or any number of channels) in a sequential way. On each channel the sample moves along the flow path, is separated via a separation column, is passed through a dedicated analyzer in that channel for determination, then moves down stream through the manifold (or valve/manifold) and passes on to the back pressure regulator. This apparatus and method enables the invention to possess both novel parallel processing along with a conventional sequential processing mode into one embodiment for various analytical applications.

Referring to Figure 1, in a parallel processing embodiment the apparatus comprises a binary pump for pumping a supercritical fluid such as carbon dioxide, and a modifier or co-solvent such as methanol, into the system. The injector injects the mixture into a line connected to a switching valve, which directs the flow into a valve manifold having check valves (directional valve). The valve manifold directs the flow (or a portion of the flow) into one or more separation columns for separation. On each line is placed a separate detector, such as a UV detector as depicted in Figure 1. Any type of detector may be placed on any line. The flow is then directed to a second manifold which is connected to a second switching valve. A backpressure regulator regulates the pressure of the entire system.

The analytical processing of samples by parallel channel screening, as well as focused optimizations within a single channel, is achieved by chromatography, and in particular by supercritical fluid chromatography (SFC), discussed in greater detail below.

The following reference numerals refer to the following components shown in Figures 1, 2 and 3:
Module 1. Binary fluid delivery module
Module 2. Autosampler
Module 3. Column oven

### Items:

**1** port switching valve upstream;
**2** parallel screening manifold upstream;
**3-1** check valve assembly
**3-2** check valve assembly
**3-3** check valve assembly
**3-4** check valve assembly
**3-5,** check valve assembly
**4-1** channel 1;
**4-2** channel 2;
**4-3** channel 3;
**4-4** channel 4;
**4-5** channel 5;
**5-1** to **5-5** check valve;
**6** downstream manifold,
**7** port switching valve downstream;
**8-1** tee.
**8-1** tee.
**8-1** tee.
**8-1** tee.
**8-5** tee.
**9** CO₂ Supply (Customer Supplied)
**10** Cooling Water Bath
**11** Cooling Exchanger
**12** CO₂ Pump
**13** Modifier Reservoir
**14** Solvent Valve
**15** Modifier Pump
**16** Dampener Chamber
**17** Prime/ Purge Valve
**18** Static Mixer
**19** Buffer Solution
**20** Syringe
**21** Valve
**22** Sample Loop
**23** Injection Valve Load Position
**24** Sample
**25** ISS Valve
**26** ABPR Automated BPR
**27** UV Detector
**28** UV Detector
**29** UV Detector
**30** UV Detector
**31** UV Detector
**32** Screw
**33** bracket
**34** line to bottom of assembly
**35** block
**36** check valve
**37** check valve housing
**38** line fittings(nut and ferrule)
**39** line from manifold
**40** line to channel/column

In Figure 1, the Module-1 box is the single binary fluid delivery module that delivers supercritical fluidic CO2 through the CO2 pump, and mixes it with a co-solvent that is pumped by the modifier pump. The CO2 is supplied from either a stand-alone cylinder or a bulk supply line to a nominal pressure range by a boosting mechanism or something similar, to a pressure optimal for instrument operation, and pumped to the supercritical state. The co-solvent is chosen through the solvent selection valve from various types and combinations of chromatographic compatible solvents, and pumped by the modifier pump to the mixer for mixing with the supercritical CO2, inside **module-1.**

This mixed mobile phase moves along the flow path to reach **module-2,** the autosampler. In the autosampler, only one single injection of the sample is made, and the injected sample is switched into the flow stream by an injection valve. The method of injection can be an autosampler with sample handling capability. The illustrated embodiment uses an autosampler with plate handling capability.

Once the sample is injected, the mixed mobile stream passes along the flow path to reach **module-3,** the column oven, with an operational temperature range from 40°C to 90°C normally for a supercritical state of the mobile phase. The oven also houses the valve system that is designed to realize the parallel (and/or single) screening mode. For the desired parallel screening mode, the stream first passes through column switch valve **1,** and moves along by designated port that leads to manifold **2.** Through manifold **2** the injected sample portion can be divided in multiple ways. One portion will move through check valve assembly **3-1** onto first channel **4-1.**

On channel **4-1,** an SFC column is installed to carry out the separation for this portion of sample for analysis and detection purposes. After the separation is achieved in this channel, the separated portion of the sample moves downstream to a dedicated detector in this channel, which is a UV detector in the illustrated embodiment. The characteristics of the separated sample are determined in the detector and the corresponding data is acquired and recorded by software along with specific channel information for identification purposes. Multiple detectors can be installed along this first channel (or along any channel) depending on the needs of the user.

After the sample portion passes through the detector, it moves through check valve **5-1,** manifold **6,** and to an automated backpressure regulator (ABPR) for the completion of process.

Within the sample time scale as the first portion is going through the first channel, a second portion of the sample divided at the manifold **2,** will pass through check valve assembly **3-2** onto the second channel **4-2.** On channel **4-2,** an SFC column is installed to carry out the separation for this portion of the sample for analysis and detection purposes. After the separation is achieved in this second channel, the separated potion of sample moves downstream to a dedicated detector on this second channel, which is a UV detector in the illustrated embodiment. The characteristics of the separated sample are determined in the detector and the corresponding data is acquired and recorded by software along with specific channel information for identification purposes. Multiple detectors can be installed along this second channel according to user preferences.

After the second sample portion passes through the detector, it moves through the check valve **5-2** and manifold 6, where it recombines with the first portion into the same stream, and moves to the automated backpressure regulator (ABPR) for the completion of process. It is noted that multiple detectors as well as other types of apparatus such as a fraction collector, can also be installed at any point along the flow path, both before and optionally after the ABPR, to achieve various detection purposes.

In a similar manner, the 3^{rd}, 4^{th} and 5^{th} portions of the divided sample are simultaneously flowing through the corresponding 3^{rd}, 4^{th} and 5^{th} channels for analysis. In the illustrated embodiment, UV detectors are used on the 3^{rd} and 4^{th} channel, while the photodiode array detector (PDA) is used on the 5^{th} channel. All portions of the original sample will pass through the detectors after separation, and after the check valves **5-3, 5-4** and **5-5,** will recombine together at manifold **6** with aforementioned 1^{st} and 2^{nd} portions, and will continue to move down the flow path to the backpressure regulator.

Whilst this parallel screening mode is realized by the illustrated embodiment, the present invention also has the designed feature of single channel capability that enables sequential screening as well as a single channel operation mode for optimizing conditions or experimenting on any one single channel for desired separation performance.

In the illustrated embodiment, if a single channel mode is desired, the designed valve system in **module-3** is used to achieve this feature. For example, if screening on channel 3 is desired, the column switch valve is programmed to a certain position such that the injected sample will only flow through directly to check valve assembly **3-3,** thus bypassing the manifold **2.** In this way the injected sample will only flow down channel **4-3** for analysis purposes, and will be prevented from flowing to any other direction in any other channels, by the directional mechanism of the valve system in **module-3.**
For example, if channel 3 is selected, the 1^{st} switch valve will rotate to the port that is directly connected to check valve 3-3, so the stream will flow directly to the tee point of 3-3, but not through the manifold 2, because check valve3-3 will only allow flow to go one direction, so the flow can not flow backwards to manifold 2, but instead will only be able to go down channel 4-3 and so on. In this way a single channel capacity is generated.

In the same manner, each and every individual channel in the illustrated embodiment is also programmed to have a single channel screening mode. The sequential screening for sample analysis is therefore realized by injecting samples in the single channel mode one at a time with any desired combination of channels, as programmed through the controlling software.

In the sequential screening mode, it is noted that multiple detectors and other apparatus can be installed on any desired channel as well for specific application purposes, just as they are used in the parallel screening mode.

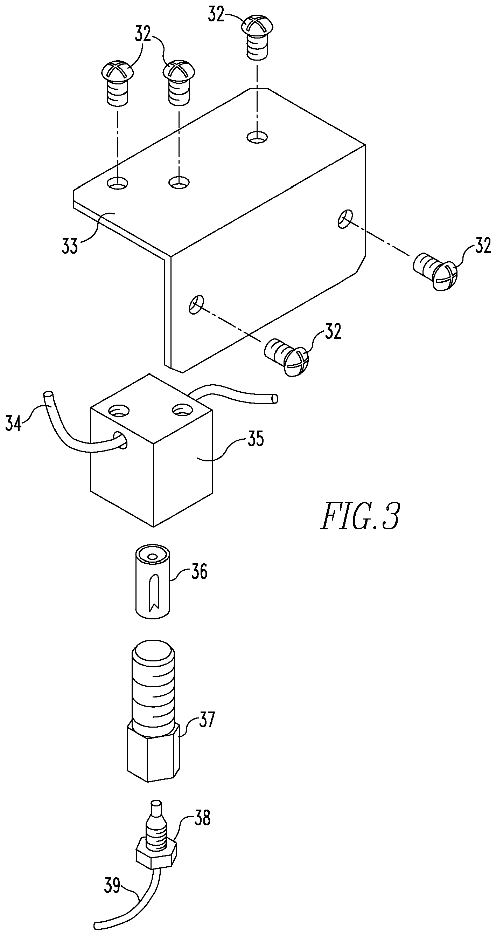

In the apparatus of the present invention, a valve system, together with the other hardware and software, enables the simultaneous screening on all channels with columns. The valve assembly is a combination of a check valve shown in Figure 3 and a mixing tee, both currently manufactured by TharSFC. The valve system, by which the parallel screening is realized, together with the other hardware and software, also enables a single channel screening mode where any user-defined preferred single channel can be used, without the need to use all other channels at any specified time and or occurrence of particular events.

The software used in the present invention is programmed with the capability of screening multiple co-solvents, gradient conditions, temperature and pressure conditions sequentially with each injection of a sample. Additionally, the software can be used to program either gradient or isocratic screening conditions simultaneously onto all the channels for optimization of the separation.
The software evaluates each run based on user-specified criteria for separation performance on each channel, and adds additional runs to the sequence by identifying the channel with the best column performance and then switching the valves to run in single channel mode with optimized conditions based on those criteria. For example, a user may select a desired peak count and separation factors that the software will use to automatically determine which channel performs the best, and then manipulate the hardware to run repeated separations on that single channel for optimization. Then, the user would simply load the hardware with samples and start the process.

The software is also designed to acquire all data types for any specific sample simultaneously from a combination of various characteristics determinations, such as, but not limited to, absorptions under any specified ultra-violet wavelength(UV), full spectrum determination by photodiode array detector(PDA), light scattering detector(ELSD) and mass spectrometer (MS). The software provides a single data package output for all of the data types acquired, in the form of a report to the user for decision making. This report includes all necessary information to describe the selected channels and conditions so that the user may quickly determine what channels and conditions were successful, and to what degree, so that candidates may be selected quickly and efficiently for optimization. In a different embodiment, a mass spectrometer (MS) can be placed where all streams join together prior to the back pressure regulator. In this embodiment, when screening is performed on all channels, the MS data (spectra) generated is the combined output of all channels. The software through additional processing attempts to deconvolute the data and associate spectra to each channel based on data generated by the detector on the specific channel.

### EXAMPLES

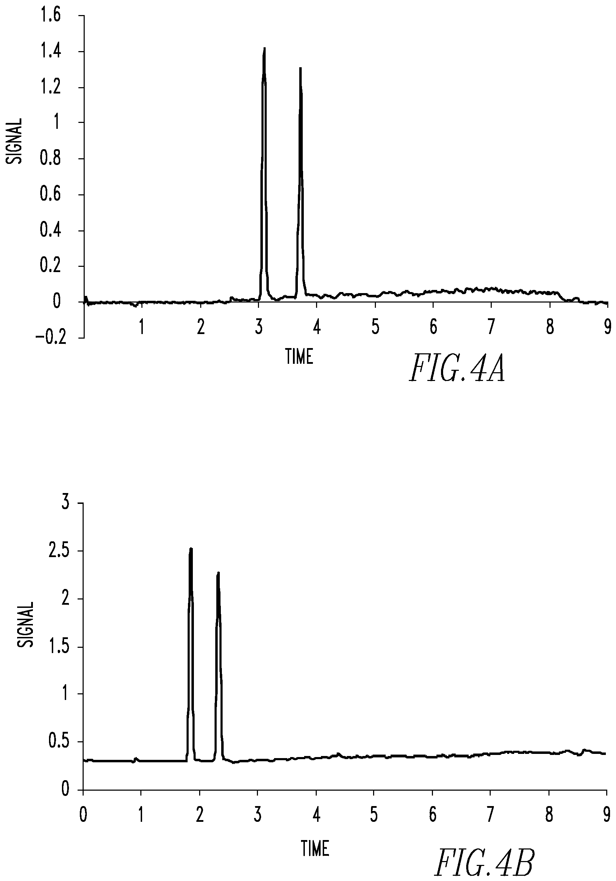

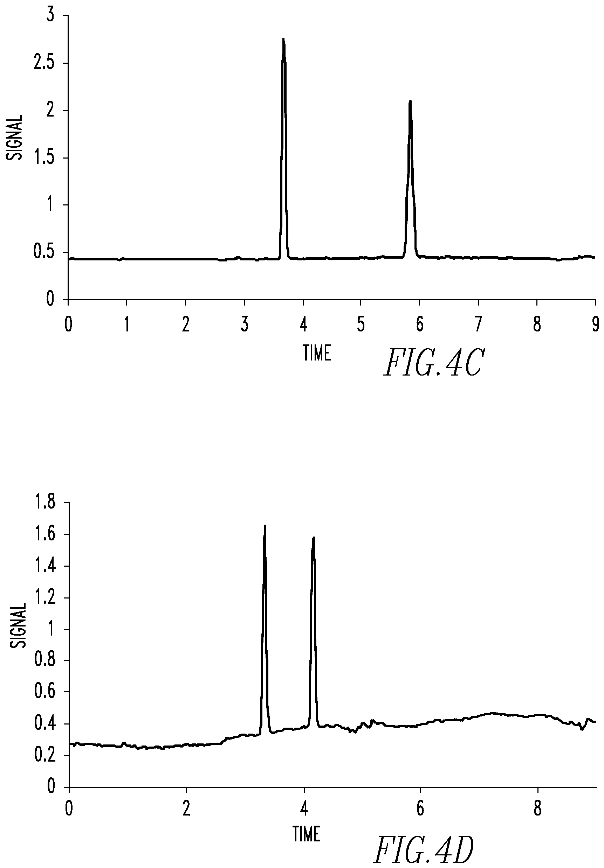

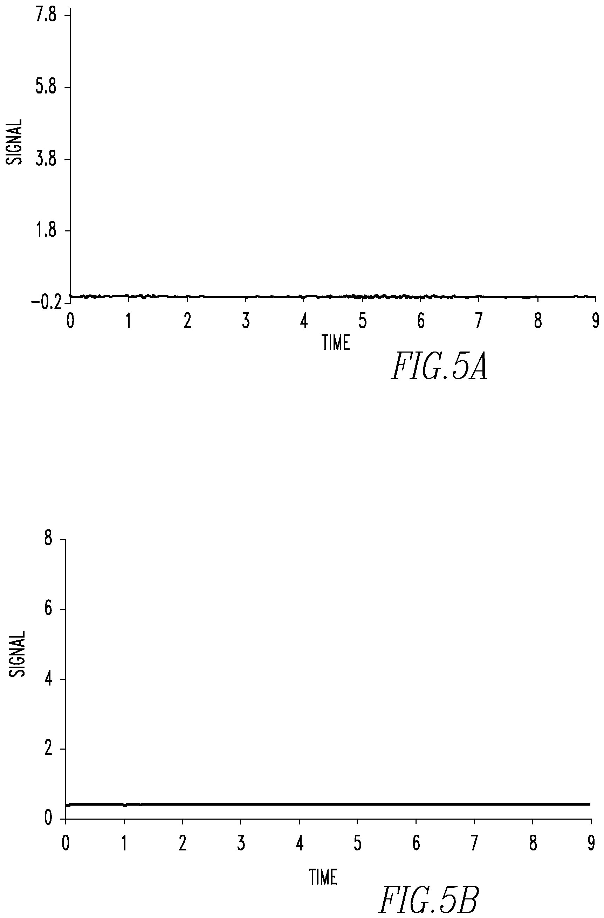

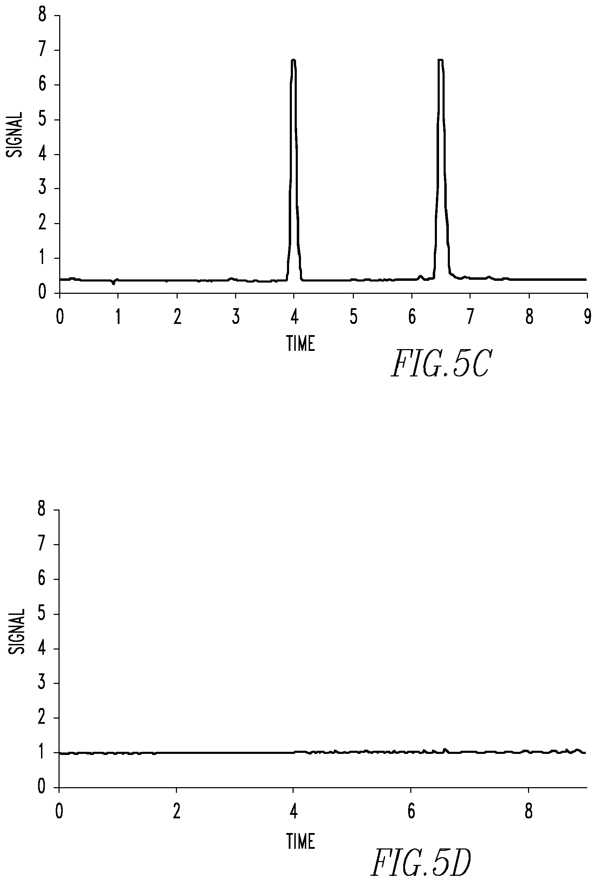

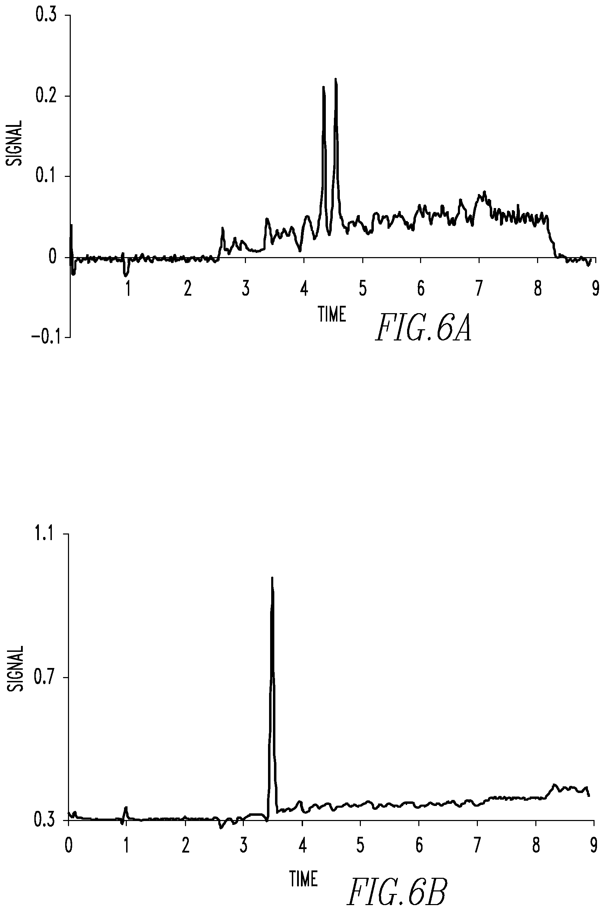

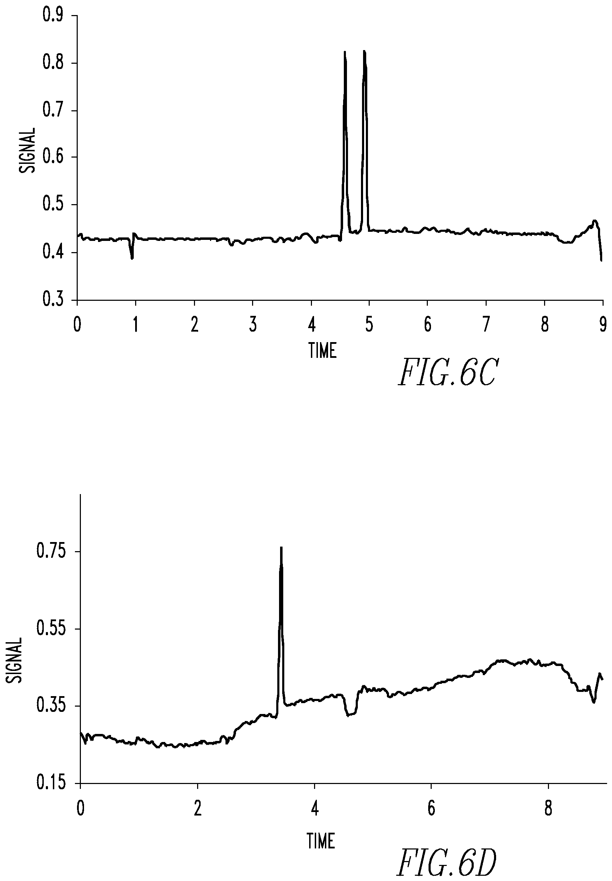

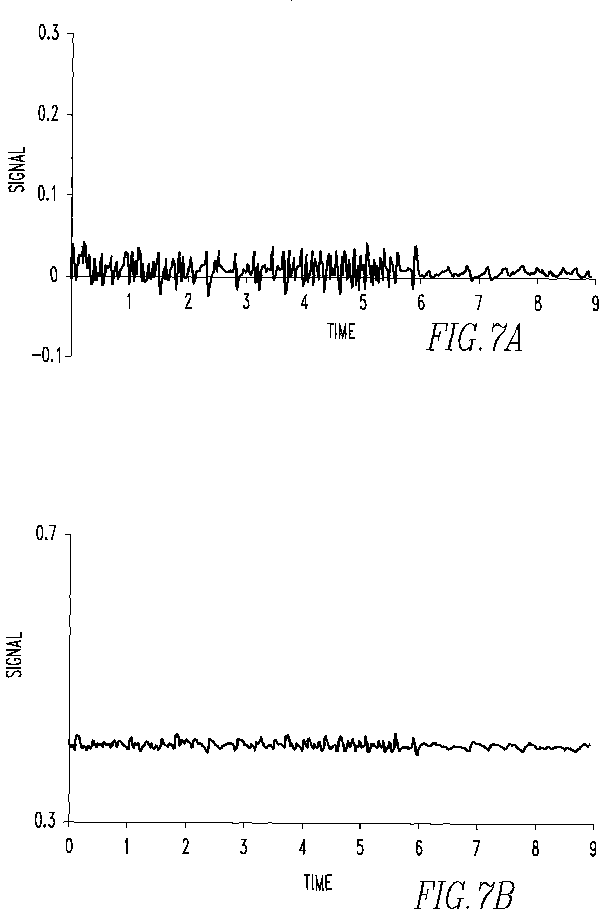

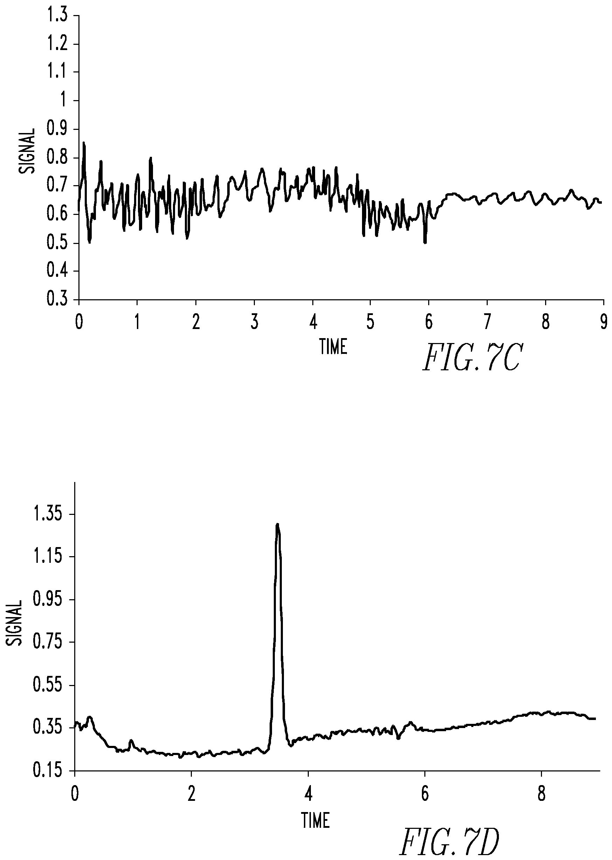

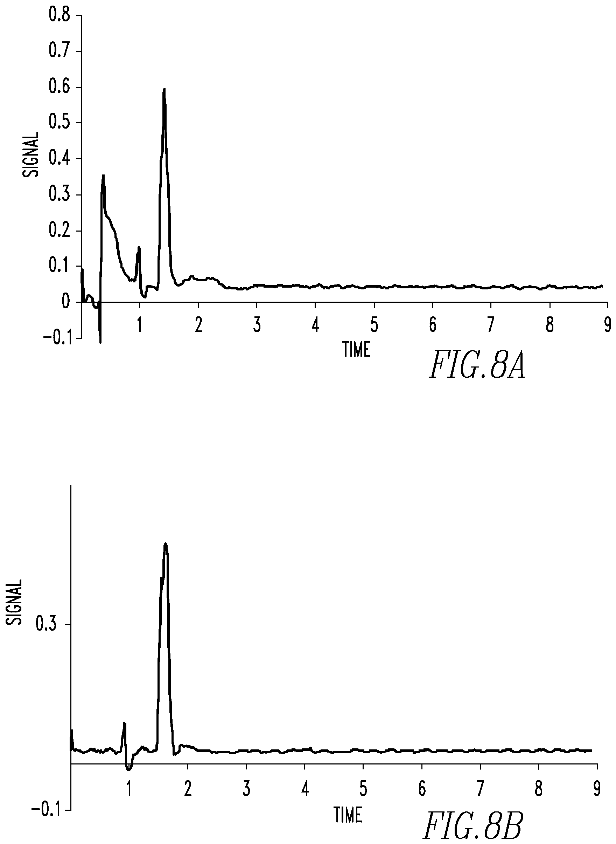

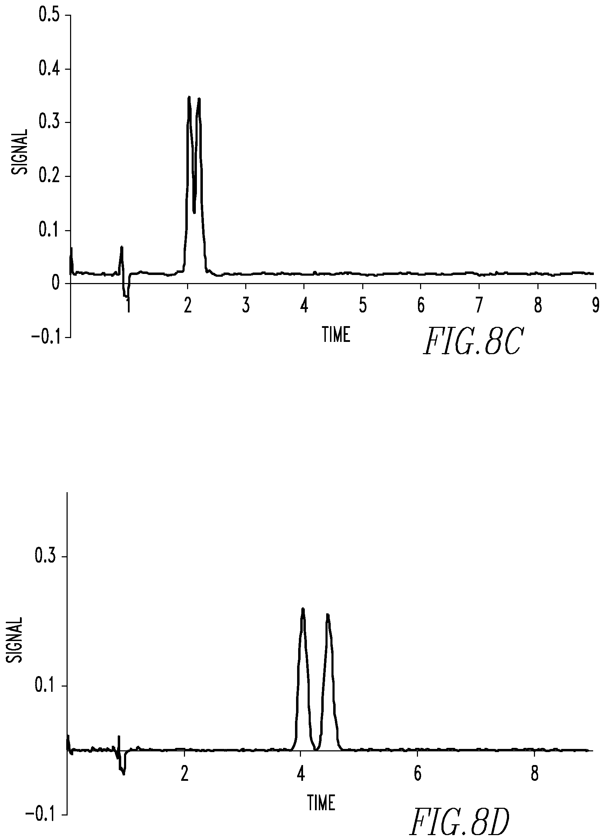

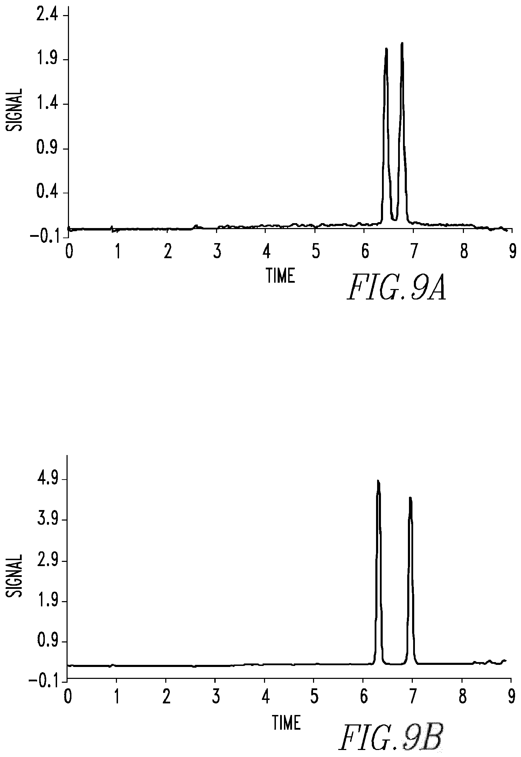

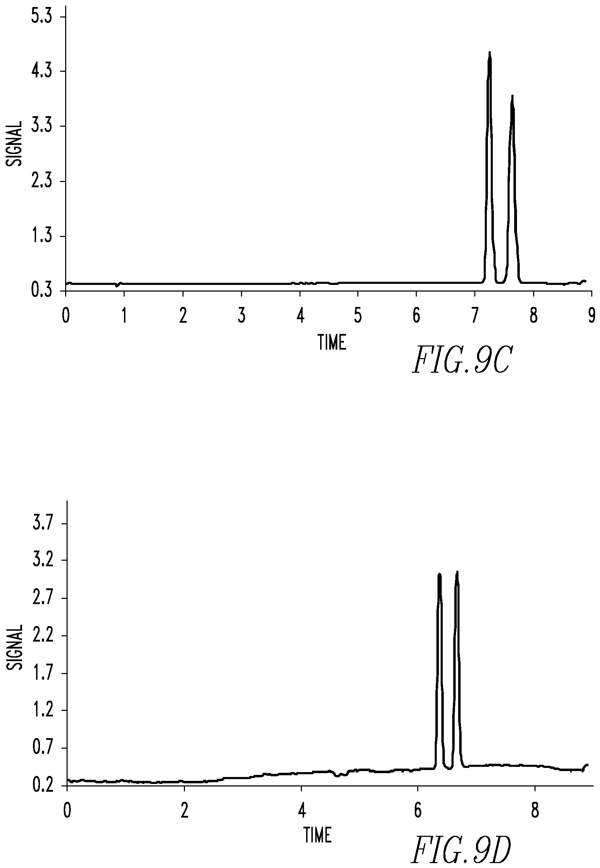

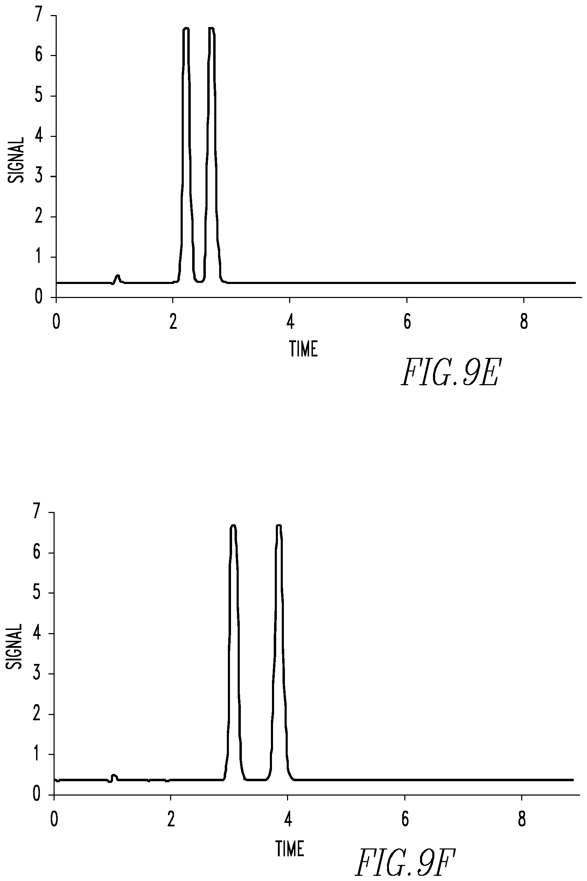

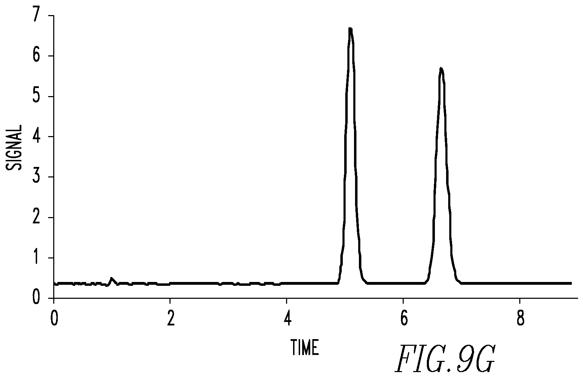

Below are examples of the apparatus according to the present invention. These examples are intended to illustrate the invention and should not be construed as limiting the invention in any way.
In Example 1, shown in Figures 4A - 4D, chromatograms are shown from one embodiment of the present invention where multiple detectors are placed on all channels for simultaneously parallel screening. In this example, four UV detectors were used to analyze a single injection of trans-stilbene oxide (TSO) in gradient flow mode. Figures 4A - 4D represent columns C1 - C4 on each channel.
Example 2, Figures 5A - 5d, shows chromatograms from one embodiment of the present invention where a single channel is employed using general gradient mode on channel 3 . The compound is TSO.
In Example 3, Figures 6A - 6D illustrate chromatograms from one embodiment of the present invention where multiple detectors can be placed on all channels for parallel screening of a second sample. In this example, four UV detectors were used to analyze a single injection of Mephenesin in gradient flow mode. Figures 6A - 6D represent columns C1 - C4 on each channel.
In Example 4, Figures 7A - 7D illustrate chromatograms from one embodiment of the present invention where a single channel is employed using general gradient mode on channel 4. The compound is Mephenesin. Figures 7A - 7D represent columns C1 - C4 on each channel.
In one embodiment the second step of method development is to run a focused gradient. In Example 5, Figures 8A - 8D illustrate chromatograms from running a focused gradient on single channel with sample Mephenesin. The results are evaluated and isocratic sequential injections are made on the single channel with column C1 to obtain an optimized method.
In Example 6, Figures 9A - 9D illustrate chromatograms from a third example of method development on the compound binol. All four channels are used to quickly develop an optimized method for screening binol. Figures 9A - 9D are columns C1 - C4 on each channel.

Illustrated in Figures 9E - 9G are chromatograms for the second step from the same example (binol) method development. Results were obtained by running a focused gradient on binol. The results are evaluated and isocratic sequential injections are made on the single channel with column C2 to obtain an optimized method.

From the foregoing it will be appreciated that, although specific embodiments of the invention have been described herein for purposes of illustration, various modifications may be made without deviating from the scope of the invention. Accordingly, the invention is not limited except as by the appended claims.

## Claims

1. An apparatus for supercritical fluid chromatography, the apparatus comprising:
a binary pump (12);
an autosampler (module 2), downstream of the binary pump (12), including a sampling valve (21);
a first port switching valve (1), downstream of the autosampler (module 2);
a first manifold (2) downstream of the first port switching valve (1), operable to divide a sample into two or more channels;
two or more channels (4) downstream of the first manifold (2), each channel (4) having a check valve assembly (3), a separation column downstream of the check valve assembly (3) and one or more dedicated detectors (27-31);
a second manifold (6) downstream of the channels (4) to recombine the samples;
a backpressure regulator (26) downstream of the second manifold (6), wherein the apparatus excludes additional backpressure regulators or pumps on individual channels; and
computer software and hardware to
1) control distribution of fluid through the apparatus, including switching between:
a multi-channel mode; providing simultaneous parallel screening of the sample through the two or more channels (4); and
a single channel mode, in which the sample flows through only a selected one of the two or more channels (4);
2) analyze data collected by the one or more dedicated detectors (27-31); and
3) optimize separation of analytes by controlling solvent combinations, concentration gradients, pressure and temperature.

2. The apparatus of claim 1, wherein the apparatus switches between multi-channel mode and single channel mode using only software, without any physical configuration change by a user.

3. The apparatus of claim 1, further including a software capability of optimizing separations based on obtained results.

4. The apparatus of claim 1, wherein the number of channels (4) is greater than 8 and preferably greater than 24.

## Patentansprüche

1. Vorrichtung zur Chromatografie für superkritische Flüssigkeiten, wobei die Vorrichtung Folgendes umfasst:
eine binäre Pumpe (12);
einen Autosampler (Modul 2) stromabwärts von der binären Pumpe (12), beinhaltend ein Probenahmeventil (21);
ein erstes Port-Umschaltventil (1), stromabwärts vom Autosampler (Modul 2);
einen ersten Verteiler (2) stromabwärts vom ersten Port-Umschaltventil (1), der betreibbar ist, um eine Probe in zwei oder mehr Kanäle aufzuteilen;
zwei oder mehr Kanäle (4) stromabwärts vom ersten Verteiler (2), wobei jeder Kanal (4) eine Rückschlagventilanordnung (3), eine Trennsäule stromabwärts von der Rückschlagventilanordnung (3) und einen oder mehrere dedizierte Detektoren (27-31) aufweist;
einen zweiten Verteiler (6) stromabwärts von den Kanälen (4) zum Wiederzusammenführen der Proben;
einen Gegendruckregler (26) stromabwärts vom zweiten Verteiler (6), worin die Vorrichtung zusätzliche Gegendruckregler oder Pumpen auf individuellen Kanälen ausschließt; und
Computersoftware und -hardware zum
1) Steuern der Verteilung von Flüssigkeit durch die Vorrichtung, einschließlich Schalten zwischen:
einem Mehrkanalmodus, der simultanes Parallel-Screening der Probe durch die zwei oder mehr Kanäle (4) bereitstellt; und
einem Einzelkanalmodus, in dem die Probe durch nur einen ausgewählten der zwei oder mehr Kanäle (4) fließt;
2) Analysieren von durch den einen oder mehrere dedizierte Detektoren (27-31) gesammelten Daten; und
3) Optimieren der Trennung von Analyten durch Steuern von Lösungsmittelkombinationen, Konzentrationsgradienten, Druck und Temperatur.

2. Vorrichtung nach Anspruch 1, worin die Vorrichtung zwischen Mehrkanalmodus und Einzelkanalmodus nur mithilfe von Software, ohne jegliche physische Konfigurationsänderung durch einen Benutzer, schaltet.

3. Vorrichtung nach Anspruch 1, ferner beinhaltend eine Softwarefunktionalität zum Optimieren von Trennungen auf Basis erhaltener Ergebnisse.

4. Vorrichtung nach Anspruch 1, worin die Anzahl Kanäle (4) größer als 8 und vorzugsweise größer als 24 ist.

## Revendications

1. Un appareil permettant une chromatographie en phase fluide supercritique, l'appareil comprenant :
une pompe binaire (12) ;
un échantillonneur automatique (module 2), en aval de la pompe binaire (12), incluant une vanne d'échantillonnage (21) ;
une première vanne de commutation de port (1), en aval de l'échantillonneur automatique (module 2) ;
un premier collecteur (2) en aval de la première vanne de commutation de port (1), actionnable pour diviser un échantillon en deux canaux ou plus ;
deux canaux ou plus (4) en aval de la premier collecteur (2), chaque canal (4) ayant un ensemble clapet de non-retour (3), une colonne de séparation en aval de l'ensemble clapet de non-retour (3) et un ou plusieurs détecteurs dédiés (27-31) ;
un deuxième collecteur (6) en aval des canaux (4) pour recombiner les échantillons ;
un régulateur de contre-pression (26) en aval du deuxième collecteur (6), dans lequel l'appareil exclut des régulateurs de contre-pression additionnels ou des pompes sur des canaux individuels ; et
des logiciels et des matériels informatiques pour
1) commander la distribution du fluide à travers l'appareil, incluant la commutation entre :
un mode multicanaux, fournissant une analyse en parallèle simultanée de l'échantillon à travers les deux canaux ou plus (4) ; et
un mode monocanal, dans lequel l'échantillon s'écoule à travers uniquement un canal sélectionné parmi les deux canaux ou plus (4) ;
2) analyser des données recueillies par le ou les détecteurs dédiés (27-31) ; et
3) optimiser la séparation des substances à analyser en commandant les combinaisons de solvant, les gradients de concentration, la pression et la température.

2. L'appareil selon la revendication 1, dans lequel l'appareil commute entre un mode multicanaux et un mode monocanal en utilisant uniquement un logiciel, sans modification physique de la configuration par un utilisateur.

3. L'appareil selon la revendication 1, incluant en outre une capacité logicielle d'optimisation des séparations sur la base des résultats obtenus.

4. L'appareil selon la revendication 1, dans lequel le nombre de canaux (4) est supérieur à 8 et de préférence supérieur à 24.
